# EUROPÄISCHE PATENTANMELDUNG

(11) **EP 0 616 154 A1**
(43) Veröffentlichungstag der Anmeldung: **21.09.1994**
(21) Anmeldenummer: 94104366.3
(22) Anmeldetag: 19.03.1994
(51) Int. Cl.: F16J 15/12, F02F 11/00

(54) **Flachdichtung für Verbrennungskraftmaschinen**

(30) Priorität: 19.03.1993 DE 4308726
(71) Anmelder: Elring GmbH, D-72581 Dettingen/Erms (DE)
(72) Erfinder: Walter, Gerhard, D-72581 Dettingen (DE); Eckert, Dieter, D-73207 Plochingen (DE); Griesinger, Eberhard, D-72574 Bad Urach (DE)
(74) Vertreter: Hoeger, Stellrecht & Partner

(57) **Zusammenfassung**

Es wird bei einer Flachdichtung (10) für Verbrennungskraftmaschinen zur Montage zwischen einem Motorblock oder Zylinderbohrung in einem Zylinderkopf (18) mit einem Wirbelkammereinsatz (19), wobei letztere im montierten Zustand mit der Zylinderbohrung des Motorblocks teilweise überlappt, wobei die Flachdichtung (10) einen mit der Zylinderbohrung des Motorblocks fluchtenden, von einer Brennraumeinfassung (14,24) begrenzten Durchbruch (12) aufweist, und eine Brennraumabdichtung umfaßt, wobei die Brennraumabdichtung entlang einer in sich geschlossenenen Umfangslinie, welche den Durchbruch umfährt, ausgebildet ist, zur Erzielung höherer Standzeiten der Dichtung (10) vorgeschlagen, daß die Umfangslinie der Brennraumabdichtung (26,27) in dem Bereich, in dem die Wandung der Zylinderbohrung mit dem Wirbelkammereinsatz (19) überlappt, beabstandet zum Umfang des Wirbelkammereinsatzes und ansonsten beabstandet zur Wandung der Zylinderbohrung verlaufend zu gestalten.

## Beschreibung

Die Erfindung betrifft eine Flachdichtung für Verbrennungskraftmaschinen zur Montage zwischen einem Motorblock mit einer Zylinderbohrung und einem Zylinderkopf mit einem Wirbelkammereinsatz, welchletzterer im montierten Zustand mit der Zylinderbohrung des Motorblocks teilweise überlappt, wobei die Flachdichtung einen mit der Zylinderbohrung des Motorblocks fluchtenden, von einer Brennraumeinfassung begrenzten Durchbruch aufweist und eine Brennraumabdichtung umfaßt, wobei die Brennraumabdichtung entlang einer in sich geschlossenen Umfangslinie, welche den Durchbruch umfährt, ausgebildet ist.

Verbrennungskraftmaschinen mit einem Wirbelkammereinsatz im Zylinderkopf bieten für die Zylinderkopf-Flachdichtungen ein besonderes Problem, da normalerweise der Zylinderkopf und der Wirbelkammereinsatz aus unterschiedlichen Materialien gebildet sind, die verschiedene Wärmeausdehnungskoeffizienten haben, und außerdem der Wirbelkammereinsatz in den Zylinderkopf nicht so eingepaßt werden kann, daß die zum Motorblock hinweisenden Flächen von Wirbelkammereinsatz und Zylinderkopf exakt fluchten. Im Betrieb ergibt sich durch die Temperaturerhöhung eine Wechselbeanspruchung der Zylinderkopfdichtung an der Nahtstelle zwischen Wirbelkammereinsatz und Zylinderkopf.

Bei den bislang bekannten Flachdichtungen wurde versucht, diesem Problem mit einer elastischen Ausbildung der Flachdichtung in diesem Nahtbereich abzuhelfen. Die Dichtung um den Brennraum herum wurde mit Hilfe der Brennraumeinfassung bewerkstelligt, d.h. die Brennraumabdichtung folgte einer Umfangslinie, die im wesentlichen der Umfangslinie der Zylinderbohrung des Motorblocks entspricht.

Trotz vielfältiger Anstrengungen in dieser Richtung konnte auch mit komplizierten Aufbauten von Metallagendichtungen dieses Problem nicht zufriedenstellend gelöst werden. Als Beispiel für eine der neueren Entwicklungen von Metallagendichtungen, die sich mit dem Problem der Wirbelkammereinsätze im Zylinderkopf beschäftigen, sei die EP-A 0 480 606 genannt.

Aufgabe der vorliegenden Erfindung ist es, eine neuartige Flachdichtungskonstruktion vorzuschlagen, mit der bedeutend höhere Standzeiten der Dichtungen erzielbar sind.

Diese Aufgabe wird bei einer Flachdichtung der eingangs beschriebenen Art erfindungsgemäß dadurch gelöst, daß die Umfangslinie der Brennraumabdichtung in dem Bereich, in dem die Wandung der Zylinderbohrung mit dem Wirbelkammereinsatz überlappt, beabstandet zum Umfang des Wirbelkammereinsatzes und ansonsten beabstandet zur Wandung der Zylinderbohrung verläuft.

Mit dieser Maßnahme wird erreicht, daß die Brennraumabdichtung stets zwischen Motorblock und Zylinderkopf gebildet wird und damit die sich im Betrieb des Motors ausbildende Stufe zwischen Zylinderkopf und Wirbelkammereinsatz umfahren wird, was die eingangs beschriebenen Probleme vollständig beseitigt. Vorzugsweise wird der Abstand der Umfangslinie zum Umfang des Wirbelkammereinsatzes und zur Zylinderwandung im wesentlichen gleichmäßig sein. Überraschenderweise ergeben sich durch die Zurückverlagerung der Brennraumabdichtung im Bereich des Wirbelkammereinsatzes von der Brennraumeinfassung ins Hinterland der Dichtung keine zusätzlichen Probleme, obwohl sich gegebenenfalls ein minimaler Spalt zwischen der Zylinderkopfdichtung und dem Motorblock bzw. der Zylinderkopfdichtung und dem Wirbelkammereinsatz bilden kann, der zunächst nicht gasdicht gegenüber dem Brennraum abgedichtet ist und den Eintritt von Verbrennungsgasen erlaubt. Der sich gegebenenfalls bildende Spalt zwischen der Flachdichtung und dem Wirbelkammereinsatz einerseits und der Flachdichtung und dem Motorblock andererseits setzt sich in einer kurzzeitigen Einbrennphase benachbart zum Brennraumrand mit Verbrennungsprodukten und Ablagerungen zu, so daß nach relativ kurzer Zeit bereits gewährleistet ist, daß kein nennenswerter Gasaustausch des in den beiden Spalten vorhandenen Gasvolumens mit dem Brennraumvolumen mehr stattfindet.

Es ist zu beachten, daß die Gasdichtheit jedoch stets durch die eigentliche Brennraumabdichtung mit ihrem erfindungsgemäßen Verlauf sichergestellt wird.

Mit der erfindungsgemäßen Flachdichtung gelingt es insbesondere, mit einer einfachen konstruktiven Maßnahme den eingangs beschriebenen Nahtbereich zwischen Zylinderkopf und Wirbelkammereinsatz sicher und dauerhaft abzudichten.

Die an dieser Stelle nicht näher diskutierte Abdichtung der Durchgänge für Kühlmittel und Schmierstoffe kann auf vielseitige Art und Weise erfolgen, insbesondere auch mit Hilfe von Elastomerbeschichtungen und -dichtelementen.

Vorzugsweise weist die erfindungsgemäße Flachdichtung im Bereich der Überlappung von Wirbelkammereinsatz und Motorblock ein elastisch verformbares Stützelement auf, welches unter allen Betriebsbedingungen dafür sorgt, daß der Wirbelkammereinsatz am Motorblock abgestützt wird und so sicher in seiner Einbaulage im Zylinderkopf gehalten wird.

Vorteilhaft kann die Brennraumeinfassung einstückig mit dem Stützelement ausgebildet sein, wobei dann die Brennraumeinfassung auf einer Seite der Dichtung einen Lappen angeformt erhält, dessen Kontur im wesentlichen der Kontur des Teils des Wirbelkammereinsatzes entspricht, der mit der Flachdichtung überlappt.

Das Stützelement läßt sich sehr einfach als Halbsicke in einer Blechlage ausbilden, die bereits für eine ausreichende elastische Abstützung des Wirbelkammereinsatzes am Motorblock ausreicht. Diese Halbsicke kann beispielsweise in dem Lappen der Brennraumeinfassung ausgebildet sein, aber auch genauso gut in einem anderen Bauteil der Flachdichtung.

Vorzugsweise wird die erfindungsgemäße Flachdichtung als mehrlagige Metallagendichtung ausgebildet, deren bevorzugter Aufbau eine metallische Trägerplatte, eine obere und eine untere Metallage umfaßt, wobei die Trägerplatte zwischen der oberen und unteren Metallage sandwichartig angeordnet ist.

Bei jeder der zuvor beschriebenen Ausführungsformen wird eine weitere Steigerung der Dichtwerte der Dichtung beobachtet, wenn die Trägerplatte und/oder die Dichtungslagen mindestens einseitig mit einem Elastomerfilm beschichtet sind, so daß bei der aus Trägerlage und Dichtungslagen zusammengesetzten Dichtung zwischen den einzelnen Lagen jeweils mindestens eine Elastomerfilmschicht angeordnet ist. Auch die mit dem Motorblock bzw. dem Zylinderkopf in Kontakt stehenden Oberflächen der Dichtung tragen bevorzugt eine Elastomerfilmbeschichtung. Vorteilhafterweise werden die Dichtungslagen doppelseitig beschichtet, wobei dann die Trägerplatte unbeschichtet bleiben kann.

Die Trägerplatte kann dabei im wesentlichen vollflächig ausgebildet sein, abgesehen von den Durchbrüchen für den Brennraum und die notwendigen Durchlässe für Kühlmittel- und Schmiermittelströme, Schraubendurchgangslöcher, etc. Genauso gut kann jedoch die Trägerplatte im wesentlichen nur eine Haltefunktion ausüben und dabei von der Fläche her auf die wesentlichen Bereiche beschränkt sein, die die Haltefunktion der Trägerplatte für die obere und untere Metallage sicherstellen.

Ferner kann jede der beiden Ausführungsformen der Trägerplatte Bereiche mit Durchgängen für das Kühlmittel umfassen, die der Kalibrierung des Kühlmitteldurchflusses dienen. In diesem Fall ist es dann unerheblich, ob die korrespondierenden Durchgänge der Metallagen auf den kalibrierenden Durchmesser des Trägerplattendurchgangs reduziert sind oder diesen Bereich großräumig aussparen.

Die Brennraumeinfassung kann, gegebenenfalls mit dem angeformten, den Wirbelkammereinsatz abdeckenden Lappen, als gesondertes Bauteil ausgeführt sein oder aber einstückig mit einer der Metallagen ausgebildet werden.

Bei einer Vielzahl der möglichen Ausführungsformen wird die Brennraumeinfassung um die brennraumseitige Kante der Trägerplatte umgebördelt sein, wie dies auch von den bislang schon bekannten Flachdichtungen her bekannt ist.

Alternativ zu der um die brennraumseitige Kante der Trägerplatte umgebördelten Brennraumeinfassung kann diese durch einen in die Trägerplatte eingelegten Ring gebildet werden, wobei die Aussparung in der Trägerplatte für den Brennraumbereich entsprechend größer dimensioniert werden muß. Dieser Ring kann in seinem mit dem Wirbelkammereinsatz überlappenden Bereich eine Verbreiterung erfahren, wie sie im wesentlichen dem Lappen, der an die Brennraumeinfassung angeformt ist, entspricht. Die Brennraumabdichtung selbst kann durch eine Vielzahl von unterschiedlichen Maßnahmen bei der erfindungsgemäßen Flachdichtung gebildet werden. Bevorzugte Ausführungsformen hierfür sind nachfolgend genannt, wobei die Aufzählung keinen Anspruch auf Vollständigkeit erheben kann.

Eine sehr einfache Maßnahme kann darin bestehen, daß die Trägerplatte bereichsweise dicker ausgeführt wird, und zwar insbesondere im Bereich der Umfangslinie, der die Brennraumabdichtung folgen soll. Die Dickenerhöhung kann auch so ausgeführt werden, daß diese von der brennraumseitigen Kante der Trägerplatte beginnend bis zur Umfangslinie der Brennraumabdichtung verläuft, und zwar einschließlich des Bereichs, der mit dem Wirbelkammereinsatz überlappt.

Die Dickenerhöhung kann über den Verlauf des Brennraumumfangs gesehen variabel sein und auf die Steifigkeit der motorseitigen Bauteile, d.h. Motorblock und Zylinderkopf, abgestimmt sein.

Als technische Möglichkeit zur Vergrößerung der Dicke der Trägerplatte bieten sich verschiedene Möglichkeiten, die je nach Dichtungstyp bzw. dem Material der Trägerplatte ausgewählt werden können, nämlich durch Siebdruck, Gesenkschmieden, Erodieren der übrigen Bereiche, Flammspritzen, Einlegen bzw. Auflegen einer brillenartigen Metallage, Aufsintern von Sintermetall. Selbstverständlich ist auch diese Aufzählung nicht als abschließend zu betrachten.

Ersatzweise zur Dickenerhöhung oder aber auch zusätzlich kann vorgesehen sein, daß mindestens eine der Metallagen entlang der Umfangslinie der Brennraumabdichtung eine nach innen oder außen weisende Sicke umfaßt. Im Falle der Kombination dieser gesickten Metallagen mit einer Verstärkung der Trägerplatte im Bereich des Brennraums und des Wirbelkammereinsatzes ist besonders die nach innen gerichtete Sicke der Metallagen bevorzugt.

Eine besonders bevorzugte Ausführungsform der Erfindung liegt bei einer Flachdichtung vor, bei der die Metallagen und die Trägerplatte oder gegebenenfalls anstelle der Trägerplatte der eingelegte Ring mit ihren brennraumseitigen Kanten fluchtend am Brennraum enden und eine zum Brennraum hin offene Sandwichstruktur bilden. Unter der offenen Sandwichstruktur soll hier verstanden werden, daß keine Blechlage um die brennraumseitigen Kanten der Metallagen und der Trägerplatte bzw. des eingelegten Ringes umgebördelt ist, sondern daß die Kanten der Metallagen und der Trägerplatte bzw. des eingelegten Ringes offen am Brennraum enden und nicht durch weitere Maßnahmen abgedeckt werden.

Dieser Aufbau einer erfindungsgemäßen Flachdichtung weist mehrere Vorteile auf. Einer der wichtigsten Vorteile besteht darin, daß der sich üblicherweise bei einer umgebördelten Brennraumeinfassung bildende Zwickel zwischen der Rundung der Brennraumeinfassung und dem Zylinderkopf entfällt, was zu einer bedeutenden Schadraum- und damit verbundenen Schadgasverminderung führt. Ferner treten keine Probleme mit Rissen im umgelegten Material am Brennraumrand auf, da ein solches umgelegtes oder umgebördeltes Material von vornherein vermieden wird. Diese Art der Konstruktion der Flachdichtung ist selbstverständlich mit demselben Vorteil auch bei Flachdichtungen für Verbrennungskraftmaschinen einsetzbar, bei denen im Zylinderkopf kein Wirbelkammereinsatz vorgesehen ist, weshalb selbstverständlich auch für diesen Einsatzzweck Schutz für diese Art der Konstruktion der Flachdichtung beansprucht wird. Hier läuft die Umfangslinie der Brennraumabdichtung dann selbstverständlich kontinuierlich in einem vorgegebenen Abstand zur Umfangslinie des Brennraumes, d.h. im wesentlichen kreisförmig, ohne die ausweichende Stelle in das Hinterland, wie dies bei der Verwendung von Wirbelkammereinsätzen notwendig ist.

Bei einer bevorzugten Konstruktion wird die Dickenvergrößerung im Bereich der Umfangslinie der Brennraumabdichtung durch eine eingelegte Metallbrille bewirkt, die zwischen einer der Metallagen und der Trägerplatte entlang der Umfangslinie der Brennraumabdichtung angeordnet werden kann. Alternativ kann vorgesehen sein, daß diese Metallbrille auch auf eine der Metallagen aufgelegt werden kann, so daß sie oben auf der unteren oder oberen Metallage aufliegt, direkt benachbart zum Motorblock bzw. Zylinderkopf.

Da die Metallagen der Flachdichtung im montierten Zustand der Dichtung durch den Verpressungsdruck, der von Motorblock und Zylinderkopf ausgeübt wird, ortfest fixiert sind, reicht bei der Herstellung der Flachdichtung und für deren weitere Handhabung bis zum Einbau in der Regel eine wenig aufwendige Verheftung der einzelnen Bauteile der Dichtung miteinander aus. So können beispielsweise wenige Metallaschen, die von einer Seite der Dichtung durch das gesamte Dichtungsmaterial durchgreifen und auf der gegenüberliegenden Seite der Flachdichtung umgelegt sind, vollständig für die ordnungsgemäße Fixierung der Metallagen aufeinander bis zum Einbau ausreichen.

Alternativ und weiter kostengünstig ist eine Verheftung der Metallagen miteinander durch das sogenannte Durchsetzfügen.

Selbstverständlich ist auch jede andere Art der Verbindung der Metallagen miteinander zur Herstellung erfindungsgemäßer Flachdichtungen einsetzbar, wenn auch gegebenenfalls mit größerem Aufwand wie bei der oben beschriebenen Herstellung der Dichtung.

Auf den Erfolg, der erfindungsgemäß angestrebt wird, d.h. eine sichere und dauerhafte Abdichtung des Brennraumes, insbesondere bei den problematischen Wirbelkammermotoren, bleibt dies ohne Auswirkung.

Im folgenden werden bevorzugte Ausführungsformen der Erfindung anhand der Zeichnung noch näher beschrieben. Es zeigen im einzelnen:
- Figur 1: eine Draufsicht auf einen Teil einer erfindungsgemäßen Flachdichtung;
- Figuren 2a, 3a, 4a, 5a und 6a: eine Schnittansicht von verschiedenen Ausführungsformen der Flachdichtung von Figur 1 entlang der Schnittlinie A-A;
- Figuren 2b, 3b, 4b, 5b und 6b: Schnittansichten von verschiedenen Ausführungsformen der Flachdichtung gemäß Figur 1 entlang der Schnittlinie B-B;
und
- Figur 7: eine Schnittansicht von einer weiteren Ausführungsform entsprechend der Schnittlinie B-B.

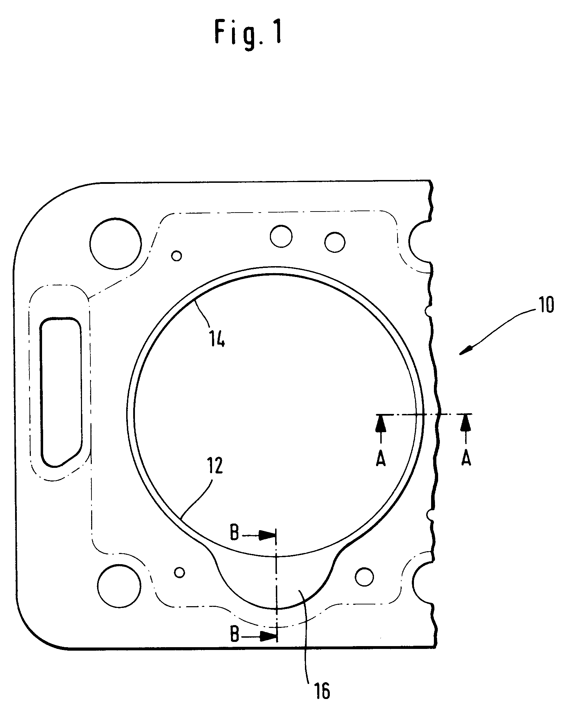

Figur 1 zeigt eine insgesamt mit dem Bezugszeichen 10 versehene erfindungsgemäße Flachdichtung in einem Ausschnitt, der den Bereich eines Zylinders beinhaltet.

Die Flachdichtung 10 weist einen Durchbruch 12 auf, welcher mit einer Zylinderbohrung eines Motorblocks im montierten Zustand der Flachdichtung zwischen Motorblock und Zylinderkopf fluchtet. Der Durchbruch 12 der Flachdichtung 10 wird durch eine Brennraumeinfassung 14 begrenzt, welche im wesentlichen ringförmig ausgebildet ist und um den Durchbruch 12 insgesamt umläuft. In einem Bereich, in dem die Brennraumeinfassung 14 mit einem Wirbelkammereinsatz des Zylinderkopfes überlappt, weist die ansonsten ringförmige Brennraumeinfassung 14 einen angeformten Lappen 16 auf, dessen Kontur im wesentlichen der Kontur des Teiles des Wirbelkammereinsatzes entspricht, der mit der Flachdichtung überlappt.

Die Flachdichtung 10 weist ansonsten mehrere Durchbrüche auf, die Schraubendurchgangslöcher, Durchlässe für Schmiermittel- und und Kühlwasserströme, etc. darstellen, auf die hier nicht näher eingangen wird und die deshalb auch nicht näher bezeichnet werden. Diese können ebenso wie später für die Abdichtung der Brennräume abgedichtet werden. Da hier kleine Drucke anliegen und keine Gasdichtheit zu fordern ist, reichen häufig in Blechlagen eingeformte Halbsicken zur Abdichtung aus. Selbstverständlich sind für diesen Bereich auch bekannte Elastomerdichtelemente verwendbar.

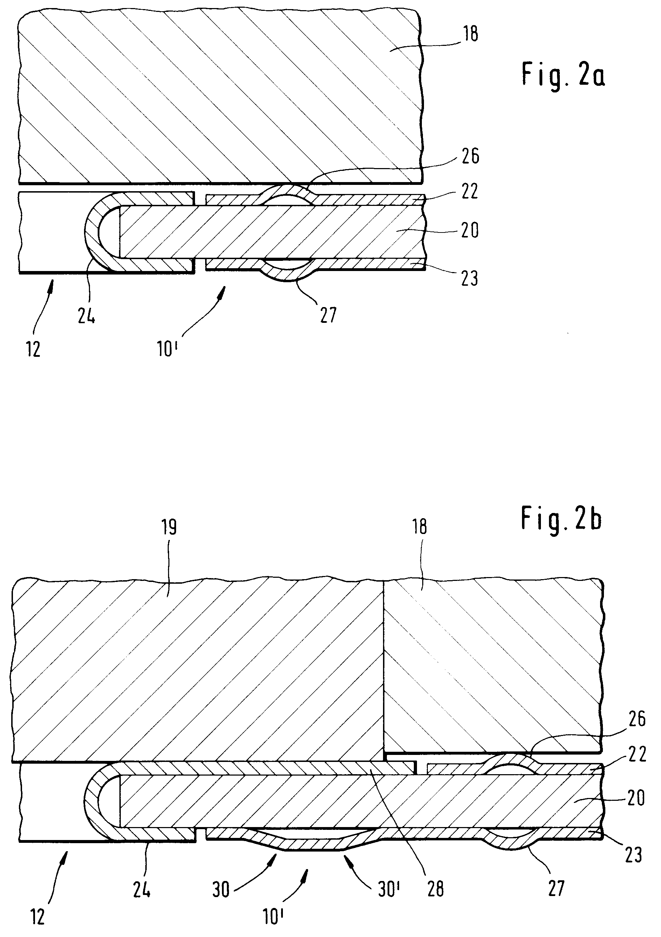

Figur 1 dient weniger der Erläuterung der eigentlichen Erfindung als vielmehr zur Veranschaulichung der Bereiche der Dichtung der in den folgenden, die Erfindung im einzelnen darstellenden Figuren 2 bis 6 gezeigten Schnittdarstellungen.

Figur 2a zeigt eine erste Ausführungsform der erfindungsgemäßen Flachdichtung 10'und einen ihr benachbart angeordneten Zylinderkopf 18. Die Flachdichtung 10' gemäß Figur 2a ist aufgebaut auf einer Trägerplatte 20 sowie einer oberen und einer unteren Metallage 22, 23. Ferner umfaßt die Flachdichtung 10' gemäß Figur 2a eine Brennraumeinfassung 24, welche als umgebördelte Metalleinfassung die brennraumseitige Kante der Trägerplatte 20 zum Durchbruch 12 hin abdeckt.

Bevorzugt wird die Dicke des Brennraumeinfassungsmaterials 24 größer gewählt als die Dicke der Metallagen 22 und 23. Die Metallagen 22 und 23 weisen in einem Abstand vom Durchbruch 12, der den Brennraum verkörpert, eine umlaufende Sicke 26, 27 auf, welche im eingebauten Zustand der Dichtung, d.h. im verpreßten Zustand, zwischen Motorblock und Zylinderkopf die Brennraumabdichtung bildet. Die Brennraumeinfassung 24 mit ihrem etwas stärker gewählten Material gegenüber den Metallagen 22 und 23 definiert den minimalen Abstand zwischen Zylinderkopf und Motorblock und beschränkt die Kompression der Sicken 26 und 27 auf das notwendige Maß.

Figur 2b zeigt dieselbe Flachdichtung 10' im Bereich der Überlappung mit einer Wirbelkammer 19. Wie aus dieser Figur ersichtlich, weist die Brennraumeinfassung 24 in diesem Bereich auf einer Seite der Flachdichtung 10' eine Verbreiterung 28 auf, welche die Oberfläche der Wirbelkammer, die mit der Flachdichtung 10' überlappt, vollständig abdeckt und noch etwas über den Bereich der Wirbelkammer 19 hinausragt, so daß auch in diesem Bereich die Abstandshalter- und Dichtungsfunktion der Brennraumeinfassung 24 mit ihrem etwas dickeren Material genauso gegeben ist wie in anderen Bereichen um den Brennraum bzw. den Durchbruch 12 herum auch. Wie hier deutlich ersichtlich ist, verlaufen die Sicken 26 und 27 mit deutlich größerem Abstand vom Durchbruch 12 als in dem Bereich, der in Figur 2a gezeigt ist, halten jedoch ungefähr denselben Abstand zu dem Material der Brennraumeinfassung 24. Dadurch ist sichergestellt, daß die Verpressung der Sicken 26 und 27 auch im Bereich, der die Wirbelkammer umfährt, im wesentlichen identisch ist mit dem Zustand, wie er in dem in Figur 2a dargestellten Flachdichtungsbereich erzielt wird.

Um den Sitz der Wirbelkammer 19 im Zylinderkopf 18 bei unterschiedlichen Betriebsbedingungen des Motors sicherzustellen und zu fixieren, sind in der unteren Metallage 23 zwei Halbsicken 30, 30' vorgesehen, welche die Wirbelkammer in ihrem Sitz im Zylinderkopf stützen.

Prinzipiell ist es auch möglich, die Brennraumeinfassung 24 in dem der Verbreiterung 28 gegenüberliegenden Bereich ebenfalls zu verbreitern (nicht dargestellt), daß die zwei Halbsicken 30, 30' mit in die Brennraumeinfassung 24 integriert sind.

Bei der in Figur 2a und b gezeigten Ausführungsform der Flachdichtung 10' wird als Trägerplattenmaterial ein durchgängig gleichstarkes Material verwendet, weshalb bei den Metallagen 22, 23 gegenüber dem Material der Brennraumeinfassung 24 ein etwas schwächeres Material zu verwenden ist.

Hier reichen bereits geringere Unterschiede in der Dicke der Materialien aus, beispielsweise eine Dickendifferenz von ca. 0,1 mm, um zu sehr befriedigenden Brennraumabdichtungen und zu Flachdichtungen mit sehr hohen Standzeiten zu kommen. Beispielhaft für die Dimensionierung der einzelnen Bauteile der Dichtung seien die Dicken der einzelnen Bauteilmaterialien genannt. Für die Brennraumeinfassung 24 kann ein Material mit einer Stärke von ca. 0,3 mm verwendet werden, während für die Metallagen 22 und 23 ein Material mit einer Dicke von ca. 0,25 mm Verwendung findet. Für die Trägerplatte 20 empfiehlt sich ein Material mit einer Dicke zwischen 0,2 und 0,7 mm, aber auch dickere und gegebenenfalls dünnere Materialien können Verwendung finden. Über die Wahl der Trägerplattedicke lassen sich auf einfache Weise die von den Motorenherstellern geforderten unterschiedlichen Einbaudicken der Zylinderkopfdichtungen realisieren. Die eigentlichen Funktionsteile der Dichtung können bei unterschiedlicher Dicke der Trägerplatte in identischer Form verwendet werden.

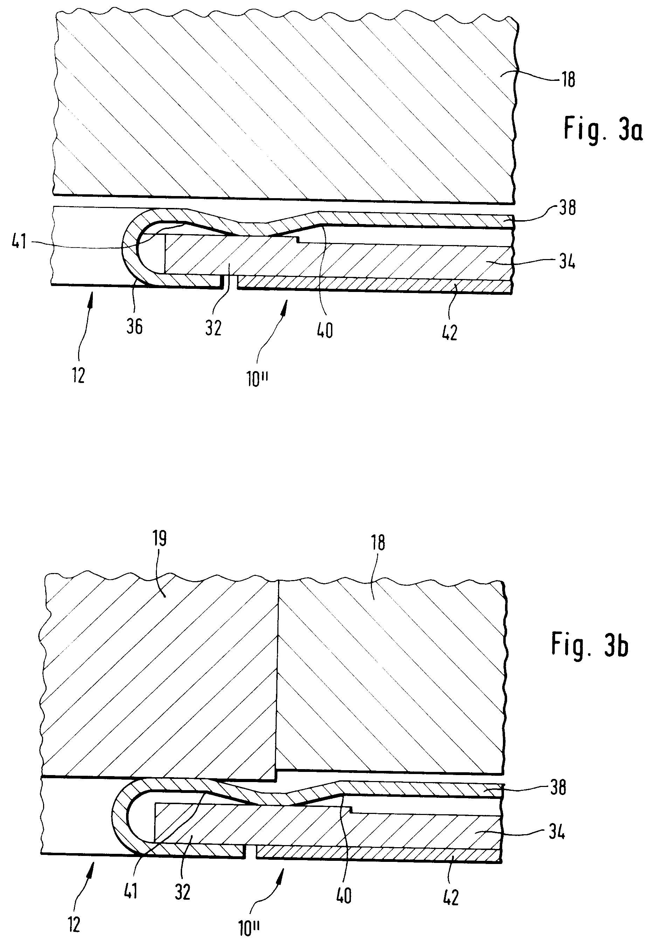

Die Figuren 3a und 3b zeigen eine andere Ausführungsform der Erfindung, bei der der Abstand zwischen Zylinderkopf 18 und dem Motorblock (nicht gezeigt) durch einen verstärkten Teil 32 einer Trägerplatte 34 zusammen mit dem Material einer Brennraumeinfassung 36 definiert wird. Die Brennraumeinfassung ist bei diesem Ausführungsbeispiel einstückig mit einer oberen Metallage 38 ausgebildet, welche um das brennraumseitige Ende der Trägerplatte 34 umgebördelt ist und die Trägerplatte 34 brennraumseitig einfaßt. Die obere Metallage 38 weist zwei Halbsicken 40, 41 auf, von denen die Halbsicke 41 im montierten Zustand flachgelegt wird, während die Halbsicke 40 federnd und dichtend am Zylinderkopf 18 anliegt.

Anstelle des Verstärkens der Trägerplatte 34 (Teil 32) selbst, kann man auch eine Metallbrille auf die Trägerplatte 34 auflegen, welche dann entsprechend dem Trägerplattenteil 32 zu einer bereichsweisen Erhöhung der Dicke führt.

Auf der der oberen Metallage 38 gegenüberliegenden Seite der Flachdichtung ist eine untere Metallage 42 angeordnet, welche dieselbe Materialstärke aufweisen kann wie die obere Metallage 38. Da die obere Metallage 38 mit der Halbsicke 40 bereits den Brennraumabdichtungsbereich definiert, kann die untere Metallage 42 im Bereich der Brennraumabdichtung plan ausgeführt sein und flächig auf der Trägerplatte 34 aufliegen.

Figur 3b zeigt dieselbe Flachdichtung, wie in Figur 3a dargestellt, jedoch den Bereich des Wirbelkammereinsatzes 19, der im gezeigten Betriebszustand etwas aus dem Zylinderkopf 18 heraussteht.

Im Bereich des Wirbelkammereinsatzes 19 ist der verstärkte Bereich 32 der Trägerplatte 34 breiter dimensioniert, so daß er sich nicht nur über den Teil der Trägerplatte 34 erstreckt, die mit dem Wirbelkammereinsatz 19 überlappt, sondern zusätzlich auch in diesem Bereich noch bis in den mit dem Zylinderkopf 18 überlappenden Bereich hineinragt.

Der Abstand zwischen Zylinderkopf und dem Motorblock wird jetzt wieder durch den verstärkten Bereich 32 der Trägerplatte 34 sowie die Materialstärke der oberen Lage 38 (und natürlich auch der unteren Lage 42) bestimmt. Die Halbsicke 41 dient hier der federnden Unterstützung der Wirbelkammer 19 und stellt sicher, daß diese in jedem Betriebszustand des Motors sicher an ihrem Platz im Zylinderkopf 18 gehalten ist. Die Halbsicke 40 verläuft hier mit größerem Abstand zum Durchbruch 12 und verlagert die Umfangslinie der Brennraumabdichtung aus dem Bereich des Wirbelkammereinsatzes heraus bzw. zurück ins Hinterland in den Bereich des Zylinderkopfs 18. Damit ist sichergestellt, daß entlang der gesamten Umfangslinie der Brennraumabdichtung eine Abdichtwirkung zwischen dem Zylinderkopf 18 und der oberen Metallage 38 hergestellt wird, so daß die Dichtwirkung unabhängig von den Materialeigenschaften und des Materialverhaltens des Wirbelkammereinsatzes 19 ist.

Anstelle des mit der Trägerplatte 34 einstückig ausgebildeten verstärkten Bereichs 32 kann auch, wie eingangs beschrieben, ein Metallring aus Flachmaterial zwischen die Trägerplatte 34 und die obere Metallage 38 eingelegt werden, wobei die Konturen des Metallrings der Kontur des verstärkten Bereichs 32 entsprechen.

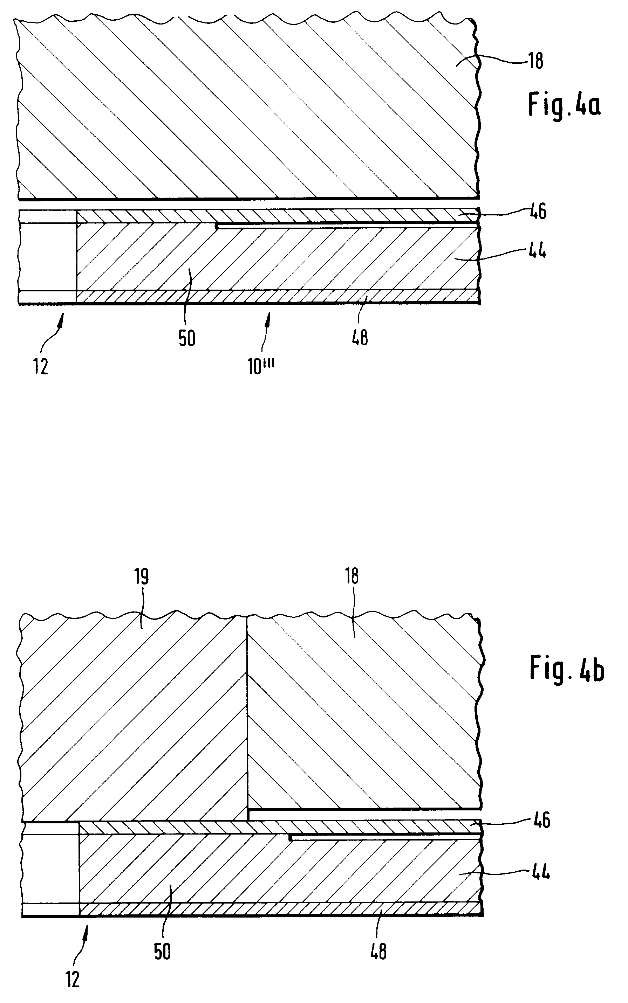

Eine weitere alternative Ausführungsform der Flachdichtung 10 ist als Flachdichtung 10''' in den Figuren 4a und 4b gezeigt. Diese Flachdichtung weist einen besonders einfachen Aufbau auf, da sie im Prinzip nur drei Elemente kennt, nämlich eine Trägerplatte 44, eine obere Metallage 46 und eine untere Metallage 48. Die Metallagen 46 und 48 sind plane Metallbleche, welche ebenso wie die Trägerplatte 44 bis an den Brennraumrand reichen. Die brennraumseitigen Kanten der Trägerplatte 44 und der Metallagen 46 und 48 sind fluchtend ausgerichtet, so daß sich eine besondere Ausbildung einer Brennraumeinfassung erübrigt, die hier von den fluchtend aufeinanderliegenden Kanten der Trägerplatte 44 und der Metallagen 46 und 48 gebildet wird. Wichtig ist bei dieser Ausführungsform, daß die Trägerplatte 44 an ihrem brennraumseitigen Ende einen verstärkten Bereich 50 aufweist, der als schmaler Ring um den Brennraum bzw. den Durchbruch 12 umlaufen kann, sich jedoch in dem Bereich, in dem die Flachdichtung 10''' mit der Wirbelkammer 19 überlappt (vgl. Figur 4b), breiter ausgelegt ist als in den anderen Bereichen der Flachdichtung.

In einigen Fällen läßt sich bereits mit dieser Anordnung eine ausreichende Dichtwirkung erzielen, ohne daß besondere Elemente vorgesehen werden müssen, die den Preßdruck im Bereich der Brennraumabdichtung benachbart zum Durchbruch 12 bzw. ins Hinterland zurückverlegt (Figur 4b) verstärken müssen.

Diese Ausführungsform der Erfindung hat den großen Vorteil, daß die Brennraumeinfassung im wesentlichen keinen Schadraum für Schadgase bilden können, insbesondere fällt der sonst übliche Zwickel bei umgebördelten Brennraumeinfassungen weg. Dieses hier erstmals gezeigte Prinzip der Ausbildung von Flachdichtungen am Brennraumrand läßt sich nicht nur bei Motoren mit Wirbelkammereinsätzen anwenden, sondern generell mit demselben Vorteil der Schadraumminimierung bei jeder Art von Motoren.

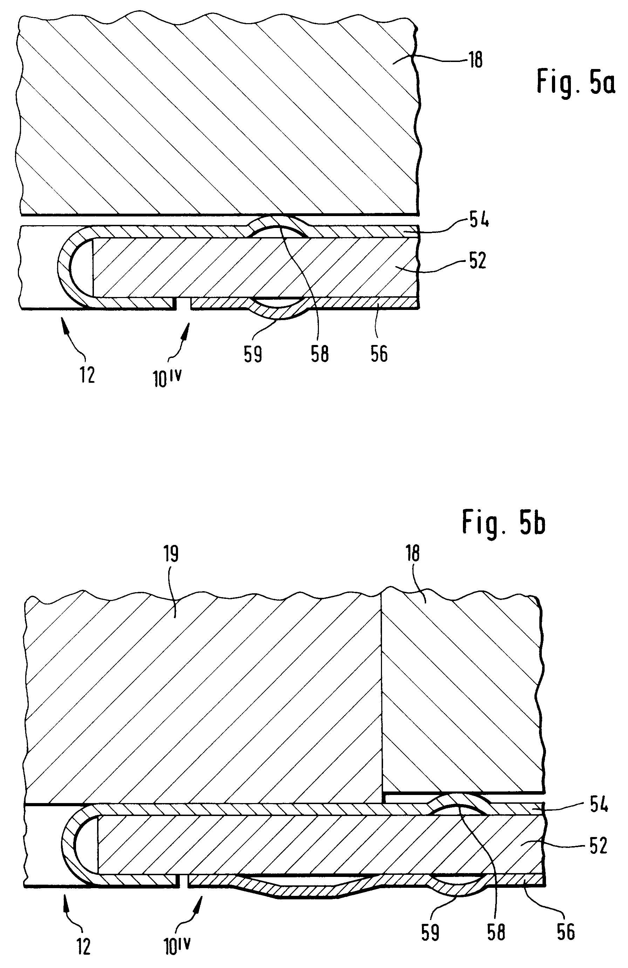

Die Figuren 5a und 5b zeigen eine weitere alternative Ausführungsform der Erfindung, die ähnlich zu der Ausführungsform ist, wie sie in den Figuren 2a und 2b gezeigt ist. Die hier gezeigte Zylinderkopfdichtung 10^{IV} weist eine im wesentlichen plane Trägerplatte 52 auf, die sandwichartig zwischen zwei Metallagen 54, 56 eingefaßt ist. Die obere Metallage 54 ist im Bereich des Durchbruchs 12 um die Trägerplatte 52 umgebördelt und bildet die Brennraumeinfassung dieser Zylinderkopfdichtung.

Die obere und die untere Metallage 54 bzw. 56 weisen beabstandet vom Brennraumrand Sicken 58, 59 auf, welche den Preßdruck in diesem Bereich verstärken und hier definiert eine Brennraumabdichtung schaffen.

In Figur 5b ist die Situation gezeigt, wie sie sich im Bereich des Wirbelkammereinsatzes 19 im Zylinderkopf 18 ergibt, wobei hier zur Stützung und Sicherung des Wirbelkammereinsatzes 19 im Zylinderkopf 18 bei der unteren Metallage 56 Halbsicken ausgebildet sind, die bei einem Zurückweichen des Wirbelkammereinsatzes 19 bei bestimmten Betriebsbedingungen des Motors für einen sicheren Sitz und Halt des Wirbelkammereinsatzes 19 im Zylinderkopf 18 sorgen. Hier sind die Sicken 58, 59 weiter vom Durchbruch 12 zurückverlegt und verlaufen außerhalb des Bereichs der Zylinderkopfdichtung 10^{IV}, der mit dem Wirbelkammereinsatz 19 überlappt, im sogenannten Hinterland.

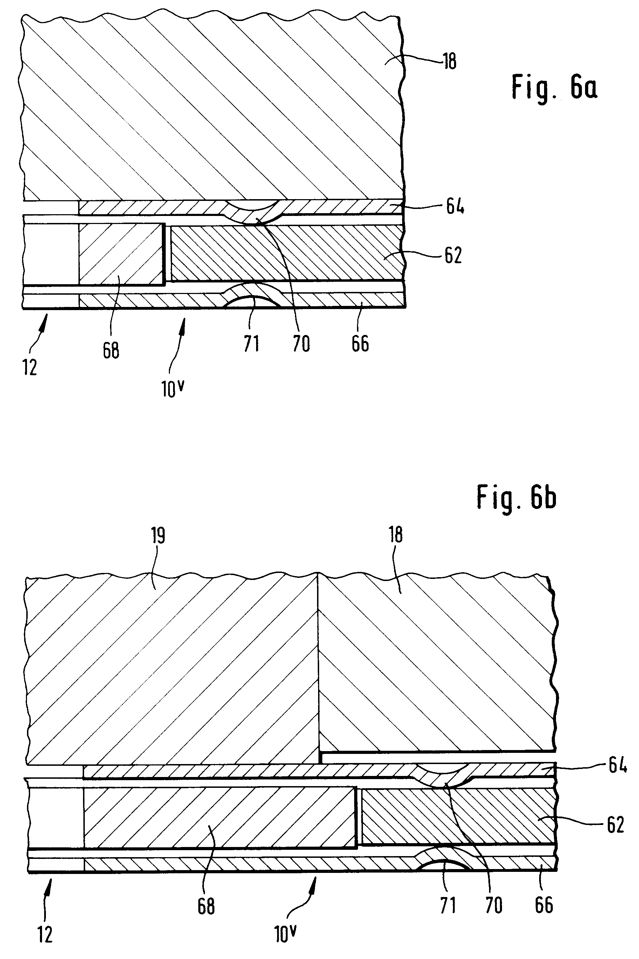

Die Figuren 6a und 6b schließlich zeigen eine weitere Ausführungsform der Erfindung, bei der eine Zylinderkopfdichtung 10^{V} als wesentliche Bauteile neben einer Trägerplatte 62 eine obere Metallage 64, eine untere Metallage 66 und einen Brennraumeinfassungsring 68 umfaßt. Der Brennraumeinfassungsring 68 liegt innerhalb des Durchbruchs der Trägerplatte 62, die hier größer ist als für den Brennraum der Zylinderbohrung notwendig ist. Die Brennraumbegrenzung wird hier durch den Einfassungsring 68 gebildet, der mit einer Stirnseite offen zum Brennraum hin endet. Ebenso enden die obere Metallage 64 und die untere Metallage 66 offen gegenüber dem Brennraum des Motors. Im eingebauten Zustand werden die obere Lage 64, die untere Lage 66 und der Brennraumeinfassungsring 68 miteinander verpreßt, so daß sich eine im wesentlichen dichte Lage dieser drei Bauteile der Flachdichtung ergibt. Auch bei diesem Ausführungsbeispiel sorgt die offene, quasi sandwichartige Struktur dafür, daß der Schadraum im Brennraum minimal gehalten wird. Ebenso ist damit gleichzeitig eine Verminderung der Schadgaszonen erreicht, was sich bei den verbesserten Abgaswerten solchermaßen abgedichteter Motoren zeigt.

Die obere und die untere Metallage 64 bzw. 66 weisen, beabstandet zum Brennraum, eine negativ ausgebildete Sicke 70, 71 auf, die den Anpreßdruck im Bereich der Brennraumabdichtung verstärken.

Wie aus Figur 6b ersichtlich, weist der Brennraumeinfassungsring 68 in dem Bereich, in dem er mit dem Wirbelkammereinsatz 19 überlappt, eine größere Breite auf, als dies sonst in dem nur mit dem Zylinderkopf überlappenden Bereich der Fall ist. Die Breite des Einfassungsringes 68 ist in dem mit dem Wirbelkammereinsatz 19 überlappenden Bereich so gewählt, daß er über diesen Bereich herausragt in den Bereich des Zylinderkopfes 18 hinein.

Die Sicken 70, 71 weichen in dem Bereich der Wirbelkammer weiter vom Brennraum 12 zurück und definieren eine Brennraumabdichtung im Bereich des Hinterlandes der Dichtung.

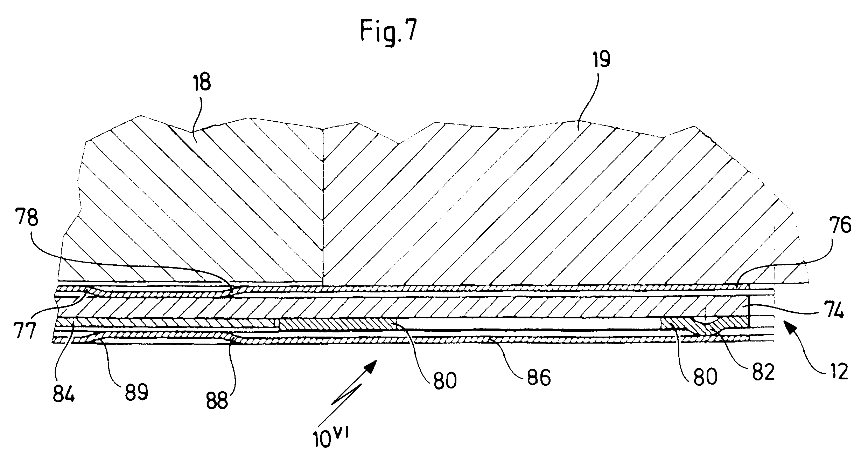

Figur 7 zeigt schließlich eine Ausführungsform der Erfindung, bei der die Zylinderkopfdichtung 10^{VI} eine im wesentlichen ebene Trägerplatte 74 umfaßt, welche auf ihrer dem Zylinderkopf 18 und der Wirbelkammer 19 benachbarten Seite eine Blechlage 76 trägt. Die Blechlage 76 weist in ihrem mit dem Zylinderkopf 18 überlappenden Bereich zwei Halbsicken 77, 78 auf, welche sich am Zylinderkopf 18 einerseits und an der Trägerplatte 74 andererseits abstützen. Als Verstärkungsteil im Bereich der Wirbelkammer 19 wird eine Brille 80 eingelegt, welche an ihrem benachbart zum Brennraum 12 angeordneten Teilbereich eine Sicke 82 umfaßt. Die Brille 80 verläuft in ihrem dem Brennraum 12 abgewandten Teil längs der Grenzlinie von Zylinderkopf 18 und Wirbelkammereinsatz 19. Im Hinterland der Dichtung schließt sich an die Brille 80 eine gesondert ausgebildete Blechlage 84 an, welche eine geringere Dicke als das Brillenmaterial aufweist. Die Zylinderkopfdichtung 10^{VI} schließt auf ihrer dem Motorblock (nicht dargestellt) zugewandten Seite schließlich mit einer weiteren, im wesentlichen durchgängigen Blechlage 86 ab, welche in dem mit dem Wirbelkammereinsatz 19 überlappenden Bereich plan und im Zylinderkopfbereich korrespondierend zu der Ausbildung der Blechlage 78 mit zwei Halbsicken 88, 89 ausgestattet ist, welche sich am Motorblock einerseits und an der Blechlage 84 andererseits abstützen.

Der Wirbelkammereinsatz 19 wird durch den gesickten Teil der Brille 80 besonders gut in seinen Sitz im Zylinderkopf 18 gepreßt. Die Brille 80 insgesamt und auch der gesickte Bereich 82 führen zu einer Verbesserung der Gasabdichtung. Durch die Verformbarkeit der Sicke 82 werden vor allem auch die unterschiedlichen Bauteilsteifigkeiten ausgeglichen. Wichtig bei dieser Ausführungsform ist ferner, daß die Lage der Überhöhung bzw. des verdickten Bereichs (Brille 80) in bezug auf den Querschnitt oder den Schichtaufbau der Zylinderkopfdichtung 10^{VI} außermittig ist.

Auch das Prinzip dieser Zylinderkopfdichtung läßt sich besonders vorteilhaft im Hinblick auf Schadgasminimierung und Schadraumreduktion bei allen anderen Motortypen anwenden, d.h. auch solchen, die über keinen Wirbelkammereinsatz verfügen.

## Patentansprüche

1. Flachdichtung für Verbrennungskraftmaschinen zur Montage zwischen einem Motorblock mit einer Zylinderbohrung und einem Zylinderkopf mit einem Wirbelkammereinsatz, welchletzterer im montierten Zustand mit der Zylinderbohrung des Motorblocks teilweise überlappt, wobei die Flachdichtung einen mit der Zylinderbohrung des Motorblocks fluchtenden, von einer Brennraumeinfassung begrenzten Durchbruch aufweist und eine Brennraumabdichtung umfaßt, wobei die Brennraumabdichtung entlang einer in sich geschlossenen Umfangslinie ausgebildet ist, dadurch gekennzeichnet, daß die Umfangslinie in dem Bereich, in dem die Wandung der Zylinderbohrung mit dem Wirbelkammereinsatz überlappt, beabstandet zum Umfang des Wirbelkammereinsatzes und ansonsten beabstandet zur Wandung der Zylinderbohrung verläuft.

2. Flachdichtung nach Anspruch 1, dadurch gekennzeichnet, daß die Flachdichtung im Bereich der Überlappung von Wirbelkammereinsatz und Motorblock ein elastisch verformbares Stützelement umfaßt.

3. Flachdichtung nach Anspruch 2, dadurch gekennzeichnet, daß die Brennraumeinfassung einstückig mit dem Stützelement ausgebildet ist.

4. Flachdichtung nach Anspruch 2 oder 3, dadurch gekennzeichnet, daß das Stützelement als Halbsicke einer Blechlage ausgebildet ist.

5. Flachdichtung nach einem der Ansprüche 1 bis 4, dadurch gekennzeichnet, daß die Dichtung eine mehrlagige Metallagendichtung ist.

6. Flachdichtung nach Anspruch 5, dadurch gekennzeichnet, daß die Dichtung eine metallische Trägerplatte, eine obere und eine untere Metallage aufweist, zwischen denen die Trägerplatte angeordnet ist.

7. Flachdichtung nach Anspruch 6, dadurch gekennzeichnet, daß die Brennraumeinfassung einstückig mit einer der Metallagen ausgebildet und um die brennraumseitige Kante der Trägerplatte umgebördelt ist.

8. Flachdichtung nach einem der Ansprüche 1 bis 6, dadurch gekennzeichnet, daß die Brennraumeinfassung von einem in die Trägerplatte eingelegten Ring gebildet ist, welcher im Bereich des Wirbelkammereinsatzes eine diesen in seinem mit dem Motorblock überlappenden Teil im wesentlichen mit einer Ringverbreiterung abdeckt.

9. Flachdichtung nach einem der Ansprüche 6 bis 8, dadurch gekennzeichnet, daß die Trägerplatte entlang der Umfangslinie der Brennraumabdichtung gleichmäßig oder ungleichmäßig verstärkt ist.

10. Flachdichtung nach einem der Ansprüche 6 bis 8, dadurch gekennzeichnet, daß mindestens eine der Metallagen entlang der Umfangslinie der Brennraumabdichtung eine nach innen oder außen weisende Sicke umfaßt.

11. Flachdichtung nach einem der Ansprüche 6 bis 8, dadurch gekennzeichnet, daß zwischen eine der Metallagen und die Trägerplatte entlang der Umfangslinie der Brennraumabdichtung eine Metallbrille eingelegt ist.

12. Flachdichtung nach einem der Ansprüche 5, 6 und 8 bis 11, dadurch gekennzeichnet, daß die Metallagen und die Trägerplatte oder der eingelegte Ring mit ihren brennraumseitigen Kanten fluchtend am Brennraum enden und eine zum Brennraum hin offene Sandwichstruktur bilden.
